# EUROPEAN PATENT APPLICATION

(11) **EP 3 730 795 A1**
(43) Date of publication of application: **28.10.2020**
(21) Application number: 20161391.6
(22) Date of filing: 06.03.2020
(51) Int. Cl.: F04D 1/06, F04D 13/02, F04D 13/08, F04D 29/58, F04D 29/041, F04D 29/047

(54) **PROCESS FLUID LUBRICATED PUMP**

(30) Priority: 23.04.2019 EP 19170570
(71) Applicant: Sulzer Management AG, 8401 Winterthur (CH)
(72) Inventor: Felix, Thomas, Leeds, LS10 1GE (GB); Bourne, Matthew, Katy, Texas, 77494 (US); Gassmann, Simon, 8051 Zürich (CH); De Raeve, Karel De, 8400 Winterthur (CH)
(74) Representative: Intellectual Property Services GmbH

(57) **Abstract**

A process fluid lubricated pump for conveying a process fluid is proposed, having a common housing (2), a pump unit (3) arranged in the common housing, and a drive unit (4) arranged in the common housing (2), wherein the common housing (2) comprises a pump inlet (21) and a pump outlet (22) for the process fluid, wherein the pump unit (3) comprises at least one impeller (31) for conveying the process fluid from the pump inlet (21) to the pump outlet (22), and a pump shaft (5), on which each impeller (31) is mounted, wherein the drive unit (4) comprises a drive shaft (42) for driving the pump shaft (5), and an electric motor (41) for rotating the drive shaft (42) about an axial direction (A), and wherein a hydrodynamic coupling (8) is provided for hydrodynamically coupling the drive shaft (42) to the pump shaft (5) by means of a transmission fluid. The hydrodynamic coupling (8) is configured to receive the process fluid as the transmission fluid.

## Description

The invention relates to a process fluid lubricated pump for conveying a process fluid in accordance with the preamble of the independent claim.

Process fluid lubricated pumps for conveying a process fluid are used in many different industries. An important example is the oil and gas processing industry, where process fluid lubricated pumps are designed e.g. as multiphase pumps for conveying hydrocarbon fluids, for example for extracting the crude oil from the oil field or for transportation of the oil/gas through pipelines or within refineries. Another application of process fluid lubricated pumps in the oil and gas industry is the injection of a process fluid, in most cases water and in particular seawater, into an oil reservoir. For such applications, said pumps are designed as water injection pumps supplying seawater at high pressure to a well that leads to a subterranean region of an oil reservoir. A typical value for the pressure increase generated by such a water injection pump is 200-300 bar (20 - 30 MPa) or even more.

Water injection into oil reservoirs is a well-known method for increasing the recovery of hydrocarbons from an oil or gas field. The injected water maintains or increases the pressure in the reservoir thereby driving the oil or the hydrocarbons towards and out of the production well.

In some applications, raw seawater is injected into the oil reservoir. However, in other applications the seawater is pretreated to avoid negative impacts on the oil reservoir, such as acidifying the oil, e.g. by hydrogen sulfide (H₂S), or blocking pores or small passages in the reservoir, e.g. by means of sulfates. To achieve the desired seawater quality, the seawater is passed through a series of ever-finer filters providing a microfiltration of the seawater. In addition, biological or electrochemical processes may be used to pretreat the seawater. Usually the final step of the filtration is a nanofiltration, in particular to remove the sulfates from the seawater. Nanofiltration is a membrane filtration process requiring to supply the water to the membrane unit with a pressure of typically 25-50 bar (2.5-5.0 MPa). Particularly for reverse osmosis filtration the required pressure may even be higher. After the nanofiltration process the seawater is supplied to the water injection pump, pressurized and injected into the subterranean region, where the oil reservoir is located. Thus, pretreating and injecting the seawater into the oil reservoir usually requires two pumps, namely a membrane feed pump for supplying the membrane filtration unit with the seawater and a water injection pump for suppling the filtered seawater to the well for introducing the seawater into the oil reservoir.

In view of an efficient exploitation of oil and gas fields, there is nowadays an increasing demand for pumps and in particular water injection pumps that may be installed directly on the sea ground in particular down to a depth of 100 m, down to 500 m or even down to more than 1,000 m beneath the water surface. Needless to say that the design of such pumps is challenging, in particular because these pumps shall operate in a difficult subsea environment for a long time period with as little as possible maintenance and service work. This requires specific measures to minimize the amount of equipment involved and to optimize the reliability of the pump. In view of water injection pumps deployed on the sea ground and the pretreatment of the seawater, the membrane feed pump might be dispensed with, if the seawater injection system is installed in such a depth that the ambient water pressure is sufficient to feed the membrane filtration unit. For example, in 500 m below the water surface the hydrostatic pressure of the seawater is already about 50 bar, which might be high enough to feed the membrane filtration unit.

Water injection pumps for subsea applications have to deliver quite a high pressure increase, which might be 200 bar or even more. For centrifugal pumps this requires high speed but relatively little speed variation. For driving such pumps it is known to use liquid filled or flooded induction motors or permanent magnet motors. Due to the liquid filling the viscous losses caused by the viscous drag are considerably high and they are increasing approximately with the cube of the motor speed. Indeed these viscous losses limit the motor speed to about 6000 rpm. For even higher speeds the viscous losses become too high to allow for an economical and efficient operation of the pump. Therefore, it has been proposed, for example in WO 2016/189397, to couple the motor and the pump unit by a combination of a hydraulic coupling in series with a magnetic coupling. The hydraulic coupling is able to increase the operating speed of the pump as compared to the motor speed. A liquid filled electrical motor is connected to a hydraulic coupling and a magnetic coupling driver section which are arranged in a hermetically sealed container. The container is filled with a cooling and lubricating fluid which is circulated through the container and an externally arranged cooling coil. A magnetic coupling follower driven by the magnetic coupling driver drives the pump impeller(s). By this design the system hermetically separates the pumped process fluid from the cooling and lubricating fluid. The system requires a specific cooling and lubricating fluid as well as the magnetic coupling to avoid a penetration of the process fluid into the driving unit.

It goes without saying that for subsea installations on the sea ground the reliability of a pump and the minimization of wear and degradation within the pump are of utmost importance.

Starting from this prior art it is therefore an object of the invention to propose an improved or an alternative process fluid lubricated pump that is in particular suited for subsea applications and for deployment on the sea ground. The pump shall have a low complexity with regard to the equipment, low wear and a high reliability in operation. In particular, the pump should be suited to be configured as a water injection pump for injecting seawater in a subterranean region.

The subject matter of the invention satisfying these objects is characterized by the features of the respective independent claims.

Thus, according to the invention, a process fluid lubricated pump for conveying a process fluid is proposed, having a common housing, a pump unit arranged in the common housing, and a drive unit arranged in the common housing, wherein the common housing comprises a pump inlet and a pump outlet for the process fluid, wherein the pump unit comprises at least one impeller for conveying the process fluid from the pump inlet to the pump outlet, and a pump shaft, on which each impeller is mounted, wherein the drive unit comprises a drive shaft for driving the pump shaft, and an electric motor for rotating the drive shaft about an axial direction, and wherein a hydrodynamic coupling is provided for hydrodynamically coupling the drive shaft to the pump shaft by means of a transmission fluid. The hydrodynamic coupling is configured to receive the process fluid as the transmission fluid.

By using the process fluid as the transmission fluid for hydrodynamically coupling the drive shaft to the pump shaft, it is no longer necessary to arrange the hydrodynamic coupling within a container that is hermetically sealed with respect to the process fluid. There is no need for a specific transmission fluid. It is only the process fluid which is used for hydrodynamically coupling the drive unit to the pump unit. Furthermore, there is no need for an additional magnetic coupling. There is only one coupling between the electric motor and the pump unit, which considerably reduces the transmission losses. Thereby the complexity of the pump is considerably reduced and the reliability is increased.

Preferably the hydrodynamic coupling comprises a casing for receiving the process fluid as the transmission fluid, a pump wheel connected to the drive shaft, a turbine wheel connected to the pump shaft, and a stator arranged between the pump wheel and the turbine wheel for guiding the process fluid. Thereby the hydrodynamic coupling may be designed as a hydrodynamic torque converter. This renders possible that the pump shaft may rotate with a higher speed (as measured in rounds per minute (rpm)) than the drive shaft. Thus, it is either possible to drive the pump shaft with a higher speed, e.g. with 7800 rpm instead of 6000 rpm or to reduce the speed of the drive shaft. Both measures increase the efficiency of the pump.

In addition, since the torque convertor may be used for the speed control of the pump or for a self-regulation of the rotational speed of the pump impeller, it is also possible to replace a variable frequency drive (VFD) with a less expensive drive, e.g. a single speed electric drive, or to use a VFD that has a narrower range for the variation of the frequency of the drive shaft rotation. Both measures constitute a considerable advantage from the economical perspective.

Preferably, the pump comprises a plurality of bearings for supporting the pump shaft and the drive shaft, wherein the bearings are configured to receive the process fluid as lubricant and coolant. By using the process fluid as coolant and as lubricant for the plurality of bearing further reduces the complexity of the pump

According to a particularly preferred embodiment, the pump is designed as a seal-less pump without a mechanical seal. A mechanical seal is usually used for the sealing of the rotating shaft of a pump and shall prevent the leakage of the process fluid along the shaft of the pump. Typically, a mechanical seal comprises a stator and a rotor. The rotor is connected in a torque-proof manner with the shaft of the pump and the stator is fixed with respect to the pump housing such that the stator is secured against rotation. During rotation of the shaft the rotor is in sliding contact with the stator thus performing the sealing action. Although such mechanical seals are widely spread within the technology of centrifugal pumps they are somewhat problematic for subsea applications because they are quite complicated and usually require additional equipment, which is often considered as a drawback for subsea applications. Therefore, it is preferred that the pump according to the invention is designed as a seal-less pump, i.e. a pump that has no mechanical seal. In many applications this requires that the pump unit and the drive unit are flooded with the process fluid. The advantage of the seal-less pump is the simpler design of the pump. In addition, the process fluid itself may be used for cooling and lubricating components of the pump, e.g. the bearing units of the pump shaft and the drive unit of the pump. Preferably the seal-less pump is configured and operated without a barrier fluid system, i.e. during operation there is no barrier fluid required or provided.

Preferably, the pump comprises a balance line configured for the recirculation of process fluid from a high pressure side to a low pressure side of the pump. By providing the balance line for recirculating an amount of the process fluid from the high pressure side to the low pressure side, it is possible to guide the process fluid to all bearings for cooling and lubricating the bearings.

Furthermore, it is preferred that the electric motor is configured to be passed through and cooled by the process fluid, so that the electric motor is also cooled by the process fluid.

According to a preferred design the balance line is arranged and configured to receive process fluid discharged from the drive unit. Thus, the process fluid, which is recirculated from the high pressure side, passes through all bearings that are arranged at the high pressure side, optionally through the hydrodynamic coupling, through the electric motor and then enters the balance line for being recirculated to the low pressure side. This design renders possible that only the pressure generated by the pump unit is used to circulate the process fluid through the pump for cooling and lubricating in particular the plurality of bearings as well as the drive unit.

According to another preferred design the pump has an external cooling loop for cooling and lubricating the drive unit and the plurality of bearings, the external cooling loop comprising a heat exchanger for cooling the process fluid, wherein the heat exchanger is arranged outside the common housing and configured to receive process fluid from the common housing and to recirculate the process fluid to the common housing.

For moving the process fluid through the external cooling loop a circulation impeller or a plurality of circulation impellers may be provided. The circulation impeller for the external cooling circuit is preferably rotated by the drive unit and may be arranged on top of the drive unit. The drive unit drives the circulation impeller, which circulates the process fluid through the heat exchanger and the bearing units. The heat exchanger may be configured as a coil surrounding the common housing of the pump.

According to still another preferred design the pump unit comprises an intermediate take-off connected to a cooling loop, wherein the intermediate take-off is configured to supply the process fluid to the cooling loop with a pressure that is larger than the pressure of the process fluid at the pump inlet and wherein the cooling loop is configured to supply process fluid to at least one bearing of the plurality of bearings and/or to the drive unit. Thus, the pressure for circulating the process fluid e.g. through plurality of bearings is taken from the pump unit itself by means of the intermediate take-off.

It is also possible that a part of the process fluid, which is used as transmission fluid in the hydrodynamic coupling, is extracted e.g. from the casing of the hydrodynamic coupling and supplied to the cooling loop.

Preferably, the pump comprises at least one balance drum or center bush or throttle bush fixedly connected to the pump shaft and defining a front side facing the pump unit and a back side, and further comprising a relief passage, which is provided between said balance drum and a stationary part configured to be stationary with respect to the common housing, wherein the relief passage is extending in axial direction along the balance drum from the front side to the back side. The at least one balance drum or center bush or throttle bush at least partially balances the axial thrust that is generated by the impeller (s) during operation of the pump

According to a preferred design the balance drum is arranged between the pump unit and the hydrodynamic coupling and preferably at the high pressure side so that the front side is exposed to the high pressure or a pressure that approximately equals the high pressure. Since the front side is exposed essentially to the high pressure, a pressure drop exists over the balance drum resulting in a force which counteracts the axial thrust generated by the impeller(s) during operation of the pump.

It is also possible to provide the balance drum at the low pressure side so that the front side is exposed to the low pressure prevailing at the pump inlet.

Of course it is also possible to provide more than one balance drum and/or other devices for balancing the axial thrust generated by the impeller(s), such as a center bush or a throttle bush (also referred to as throttle sleeve). In particular, it is possible to provide two balance drums on the pump shaft, each delimiting a respective relief passage between the respective balance drum and a stationary part. Preferably the two balance drums are arranged on both sides of the pump unit, i.e. at the high pressure side and at the low pressure side, such that the pump unit is interposed between the two balance drums. Providing two or even more balance drums or other balancing devices may be advantageous with respect to the rotor dynamic, which may be considerably improved. The rotor comprises all the rotating parts of the pump unit, namely the pump shaft, all impellers and the balance drum(s) fixed to the pump shaft. In particular, the improved rotor dynamic results from an increased rotor stability. Each balance drum contributes to the rotor stability and enhances the rotor stability. An increased rotor stability may result in a considerably reduced risk of wear, in particular in the bearing units supporting the pump shaft. In addition, the improved rotor dynamic also enhances the reliability and reduces the susceptance to failure.

In order to make the pump particularly compact it is preferred, that at least one of the plurality of bearings is arranged in the casing of the hydrodynamic coupling. Thus, at least one bearing of the pump shaft or the drive shaft is integrated into the hydrodynamic coupling.

According to a preferred embodiment the plurality of bearings comprises a first radial pump bearing for supporting the pump shaft, wherein the first radial pump bearing is arranged between the pump unit and a drive end of the pump shaft, and wherein the first radial pump bearing is arranged in the casing of the hydrodynamic coupling. By integrating the first radial pump bearing in the hydrodynamic coupling the overhang of the pump shaft is considerably reduced, because the center of gravity of the coupling between the pump shaft and the drive shaft is much closer to the first radial pump bearing. This measure increases the stability of the pump shaft during rotation and reduces susceptibility to unbalance induced by rotating overhung mass.

For the same reason it is preferred that the plurality of bearings comprises a first radial drive bearing for supporting the drive shaft, wherein the first radial drive bearing is arranged between the pump unit and the electric motor, and wherein the first radial drive bearing is arranged in the casing of the hydrodynamic coupling. By integrating the first radial drive bearing in the hydrodynamic coupling the overhang of the drive shaft is considerably reduced, because the center of gravity of the coupling between the drive shaft and the pump shaft is much closer to the first radial drive bearing. This measure increases the stability of the drive shaft during rotation and reduces susceptibility to unbalance induced by rotating overhung mass.

More preferred both the first radial pump bearing and the first radial drive bearing are arranged in the casing of the hydrodynamic coupling. Beside the reduced overhang of both the drive shaft and the pump shaft, this design is very compact and reduces the overall dimension of the pump.

According to a preferred design the pump is configured as a vertical pump with the pump shaft extending in the direction of gravity, and wherein the drive unit is arranged on top of the pump unit.

According to a preferred application the pump is configured for installation on a sea ground. The pump may be installed at a depth of down to 100 m, down to 500 m or even down to more than 1,000 m beneath the water surface.

According to a preferred embodiment the pump is configured as a water injection pump for injecting seawater into a subterranean region.

Further advantageous measures and embodiments of the invention will become apparent from the dependent claims.

The invention will be explained in more detail hereinafter with reference to embodiments of the invention and with reference to the drawings. There are shown in a schematic representation:
- Fig. 1:: a schematic cross-sectional view of a first embodiment of a process fluid lubricated pump according to the invention,
- Fig. 2:: a schematic representation of an embodiment of the drive unit with the drive bearings,
- Fig. 3:: a cross-sectional view of a first embodiment of a hydrodynamic coupling,
- Fig. 4:: a schematic cross-sectional view of the first embodiment with another embodiment of a cooling loop,
- Fig. 5:: a schematic cross-sectional view of a second embodiment of a process fluid lubricated pump according to the invention,
- Fig. 6:: a schematic cross-sectional view of a third embodiment of a process fluid lubricated pump according to the invention, and
- Fig. 7:: a cross-sectional view of a second embodiment of a hydrodynamic coupling.

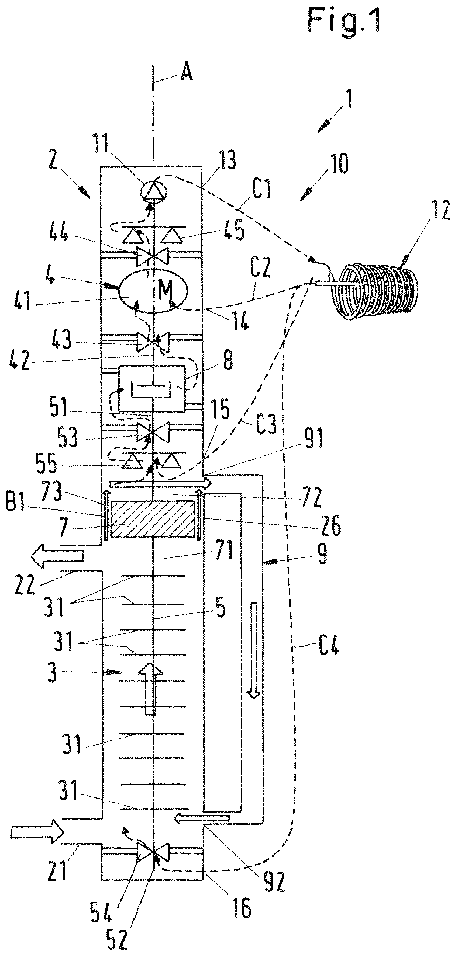

Fig. 1 shows a schematic cross-sectional view of a first embodiment of a process fluid lubricated pump according to the invention, which is designated in its entity with reference numeral 1. The pump 1 is designed as a centrifugal pump for conveying a process fluid and has a common housing 2, a pump unit 3 and a drive unit 4. Both the pump unit 3 and the drive unit 4 are arranged within the common housing 2. The common housing 2 is designed as a pressure housing, which is able to withstand the pressure generated by the pump 1 as well as the pressure exerted on the pump 1 by the environment. The common housing 2 may comprise several housing parts, e.g. a pump housing and a drive housing, which are connected to each other to form the common housing 2 surrounding the pump unit 3 and the drive unit 4. The common housing 2 is configured as a hermetically sealed pressure housing preventing any leakage to the external environment.

In the following description reference is made by way of example to the important application that the process fluid lubricated pump 1 is designed and adapted for being used as a subsea water injection pump 1 in the oil and gas industry, in particular for injecting water into a subterranean oil and/or gas reservoir to increase recovery of hydrocarbons from the subterranean region. By injecting the water into the reservoir the hydrocarbons are forced to flow towards and out of the production well. Accordingly, the process fluid that is conveyed by the pump 1 is water and especially seawater. The process fluid lubricated pump 1 is in particular configured for installation on the sea ground, i.e. for use beneath the water surface, in particular down to a depth of 100 m, down to 500 m or even down to more than 1000 m beneath the water surface of the sea.

It goes without saying that the invention is not restricted to this specific example but is related to process fluid lubricated pumps in general. The invention may be used for many different applications, especially for such applications where the pump 1 is installed at locations, which are difficult to access. Preferably, the pump 1 according to the invention is designed as a water injection pump. Even if preferred, the pump 1 is not necessarily configured for deployment on the sea ground or for subsea applications, but may also be configured for top side applications, e.g. for an installation ashore or on an oil platform, in particular on an unmanned platform. In addition, the pump 1 according to the invention may also be used for applications outside the oil and gas industry.

The term "process fluid lubricated pump" refers to pumps, where the process fluid that is conveyed by the pump 1 is used for the lubrication and the cooling of components of the pump, e.g. bearing units. A process fluid lubricated pump 1 does not require a specific barrier fluid different from the process fluid to avoid leakage of the process fluid e.g. into the drive unit 4. In addition, a process fluid lubricated pump 1 does not require a lubricant different from the process fluid for the lubrication of the pump components. In the following description reference is made by way of example to the important application that the process fluid is water, in particular seawater. The term seawater comprises raw seawater, purified seawater, pretreated seawater, filtered seawater, in particular microfiltered seawater and nanofiltered seawater. Of course, the pump 1 according to the invention may also be configured for conveying other process fluids than water or seawater.

The common housing 2 of the pump 1 comprises a pump inlet 21, through which the process fluid enters the pump 1, and a pump outlet 22 for discharging the process fluid with an increased pressure as compared to the pressure of the process fluid at the pump inlet 21. Typically, the pump outlet 22 is connected to a pipe (not shown) for delivering the pressurized process fluid to a well, in which the process fluid is injected. The pressure of the process fluid at the pump outlet 22 is referred to as 'high pressure' whereas the pressure of the process fluid at the pump inlet 21 is referred to as 'low pressure'. A typical value for the difference between the high pressure and the low pressure is for example 100 to 200 bar (10 - 20 MPa).

The pump unit 3 further comprises a pump shaft 5 extending from a drive end 51 to a non-drive end 52 of the pump shaft 5. The pump shaft 5 is configured for rotating about an axial direction A, which is defined by the longitudinal axis of the pump shaft 5.

The pump unit 3 further comprises at least on impeller 31 fixedly mounted on the pump shaft 5 and configured for increasing the pressure of the pressure fluid from the low pressure to the high pressure. Preferably the pump unit 3 comprises a plurality of impellers 31 mounted in series on the pump shaft 5 in a torque proof manner. Fig. 1 shows an example where the pump unit comprises ten impellers 31 arranged in series on the pump shaft 5.

In other embodiments the pump unit may comprise a first set of impellers and a second set of impellers which are arranged in a back-to-back arrangement.

The drive unit 4, which will be explained in more detail hereinafter, is configured to exert a torque on the drive end 51 of the pump shaft 5 for driving the rotation of the pump shaft 5 and the impellers 31 about the axial direction A.

The process fluid lubricated pump 1 is configured as a vertical pump 1, meaning that during operation the pump shaft 5 is extending in the vertical direction, which is the direction of gravity. Thus, the axial direction A coincides with the vertical direction.

A direction perpendicular to the axial direction is referred to as radial direction. The term 'axial' or 'axially' is used with the common meaning 'in axial direction' or 'with respect to the axial direction'. In an analogous manner the term 'radial' or 'radially' is used with the common meaning 'in radial direction' or 'with respect to the radial direction'. Hereinafter relative terms regarding the location like "above" or "below" or "upper" or "lower" or "top" or "bottom" refer to the usual operating position of the pump 1. Fig. 1, Fig. 4, Fig. 5 and Fig. 6 show different embodiments and variants of the pump 1 in their respective usual operating position.

Referring to this usual orientation during operation and as shown in Fig. 1 the drive unit 4 is located above the pump unit 3. However, in other embodiments the pump unit 3 may be located on top of the drive unit 4. In other embodiments the pump 1 may be configured as a horizontal pump, i.e. for a horizontal arrangement with the pump shaft 5 extending horizontally during operation of the pump.

The pump inlet 21 is arranged at the lower end of the pump unit 3, and the pump outlet 22 is located at the upper end of the pump unit 3.

In other embodiments the pump inlet 21 may be arranged at the upper end of the pump unit 3, and the pump outlet 22 may be located at the lower end of the pump 1.

The pump 1 comprises a plurality of bearings. A first radial pump bearing 53, a second radial pump bearing 54 and an axial pump bearing 55 are provided for supporting the pump shaft 5. The first radial pump bearing 53, which is the upper one, is arranged adjacent to the drive end 51 of the pump shaft 5 between the pump unit 3 and the drive unit 4. The second radial pump bearing 54, which is the lower one, is arranged between the pump unit 3 and the non-drive end 52 of the pump shaft 5 or at the non-drive end 52. The axial pump bearing 55 is arranged between the pump unit 3 and the first radial pump bearing 53. The pump bearings 53, 54, 55 are configured to support the pump shaft 5 both in axial and radial direction. The radial pump bearing 53 and 54 are supporting the pump shaft 5 with respect to the radial direction, and the axial bearing 55 is supporting the pump shaft 5 with respect to the axial direction A. The first radial pump bearing 53 and the axial pump bearing 55 are arranged such that the first radial pump bearing 53 is closer to the drive unit 4 and the axial pump bearing 55 is facing the pump unit 3. Of course, it is also possible, to exchange the position of the first radial pump bearing 53 and the axial pump bearing 55, i.e. to arrange the first radial pump bearing 53 between the axial pump bearing 55 and the pump unit 3, so that the axial pump bearing 55 is closer to the drive unit 4.

A radial bearing, such as the first or the second radial pump bearing 53 or 54 is also referred to as a "journal bearing" and an axial bearing, such as the axial pump bearing 55, is also referred to as an "thrust bearing". The first radial pump bearing 53 and the axial pump bearing 55 may be configured as separate bearings, but it is also possible that the first radial pump bearing 53 and the axial pump bearing 55 are configured as a single combined radial and axial bearing supporting the pump shaft 5 both in radial and in axial direction.

The second radial pump bearing 54 is supporting the pump shaft 5 in radial direction. In the embodiment shown in Fig. 1, there is no axial pump bearing provided at the non-drive end 52 of the pump shaft 5. Of course, in other embodiments it is also possible that an axial pump bearing for the pump shaft 5 is provided at the non-drive end 52. In embodiments, where an axial pump bearing is provided at the non-drive end 52, a second axial pump bearing may be provided at the drive end 51 or the drive end 51 may be configured without an axial pump bearing.

Preferably the radial pump bearings 53 and 54 as well as the axial pump bearing 55 are configured as hydrodynamic bearings, and even more preferred as tilting pad bearings 53, 54 and 55, respectively. Specifically preferred at least the first radial pump bearing 53 and the second radial pump bearing 54 are each configured as a radial tilting pad bearing. Of course, it is also possible that the first radial pump bearing 53 and the second radial pump bearing 54 are each configured as fixed multilobe hydrodynamic bearing.

Preferably, the pump 1 comprises at least one balancing device for at least partially balancing the axial thrust that is generated by the impellers 31 during operation of the pump 1. The balancing device may comprise a balance drum or a center bush or a throttle bush (also referred to as throttle sleeve). The first embodiment of the pump 1 comprises a balance drum 7 for at least partially balancing the axial thrust that is generated by the impellers 31. The balance drum 7 is fixedly connected to the pump shaft 5 in a torque proof manner. The balance drum 7 is arranged above the upper end of the pump unit 3, namely between the pump unit 3 and the drive end 51 of the pump shaft 5, more precisely between the upper end of the pump unit 3 and the axial pump bearing 55. The balance drum 7 defines a front side 71 and a back side 72. The front side 71 is the side facing the pump unit 3 and the impellers 31. The back side 72 is the side facing the axial pump bearing 55 and the drive unit 4. The balance drum 7 is surrounded by a stationary part 26, so that a relief passage 73 is formed between the radially outer surface of the balance drum 7 and the stationary part 26. The stationary part 26 is configured to be stationary with respect to the common housing 2. The relief passage 73 forms an annular gap between the outer surface of the balance drum 7 and the stationary part 26 and extends from the front side 71 to the back side 72. The front side 71 is in fluid communication with the pump outlet 22, so that the axial surface of the balance drum 7 facing the front side 71 is exposed essentially to the high pressure prevailing at the pump outlet 22 during operation of the pump 1. Of course, due to smaller pressure losses caused by the fluid communication between the pump outlet 22 and the balance drum 7 the pressure prevailing at the axial surface of the balance drum 1 facing the front side 71 may be somewhat smaller than the high pressure. However, the considerably larger pressure drop takes place over the balance drum 7. At the back side 72 an intermediate pressure prevails during operation of the pump 1. The intermediate pressure has a value between the low pressure at the pump inlet 21 and the high pressure at the pump outlet 22. In the embodiment shown in Fig. 1 the intermediate pressure is somewhat larger than the low pressure due to the pressure drop over the balance line 9.

Since the front side 71 is exposed essentially to the high pressure at the pump outlet 22, a pressure drop exists over the balance drum 7 resulting in a force that is directed upwardly in the axial direction A and therewith counteracts the downwardly directed axial thrust generated by the impellers 31 during operation of the pump 1.

In other embodiments (not shown) a further balance drum is arranged below the lower end of the pump unit 3, namely between the pump unit 3 and the non-drive end 52 of the pump shaft 5, more precisely between the lower end of the pump unit 3 and the second radial pump bearing 54. In still other embodiments a balance drum is provided only at the lower end of the pump 1, between the pump unit 3 and the second radial pump bearing 54 at the non-drive end 52 of the pump shaft 5 and no balance drum is provided above the pump unit 3 near the drive end of the pump shaft 5. It is also possible to arrange a balancing device between two adjacent impellers 31, for example between a first set of impellers and a second set of impellers. The first set of impellers and the second set of impellers may be configured in a back-to-back arrangement.

In the embodiment shown in Fig. 1 a balance line 9 is provided for recirculating the process fluid from the high pressure side to the low pressure side. In particular, the balance line 9 connects the back side 72 with the low pressure side of the pump 1, where the low pressure, i.e. the pressure at the pump inlet 21 prevails. Thus, a part of the pressurized process fluid passes from the high pressure side through the relief passage 73 to the back side 72, enters the balance line 9 and is recirculated to the low pressure side of the pump 1. The balance line 9 constitutes a flow connection between the back side 72 and the low pressure side at the pump inlet 21. The balance line 9 may be arranged - as shown in Fig. 1 - outside the common housing 2. In other embodiments the balance line 9 may be designed as internal line completely extending within the common housing 2.

The balance line 9 extends from a first port 91 at the back side 72 to a second port 92, which is in fluid communication with the low pressure side of the pump, e.g. with the pump inlet 21. As indicated in Fig. 1 the second port 92 may be arranged between the second radial pump bearing 54 and the first one of the impellers 31. The first and the second port 91, 92 are arranged at the common housing 2. Thus, during operation of the pump 1 the process fluid may flow from the back side 72 through the balance line 9 to the low pressure side of the pump 1. Therefore, the pressure prevailing at the back side 72, namely the intermediate pressure is essentially the same - apart from a minor pressure drop caused by the balance line 9 - as the low pressure prevailing at the pump inlet 21.

The process fluid lubricated pump 1 is designed as a seal-less pump. A seal-less pump 1 is a pump that has no mechanical seals for the sealing of the rotating pump shaft 5. A mechanical seal is a seal for a rotating shaft comprising a rotor fixed to the shaft and rotating with the shaft as well as a stationary stator fixed with respect to the housing. During operation the rotor and the stator are sliding along each other - usually with a liquid there between - for providing a sealing action to prevent the process fluid from escaping to the environment or entering the drive of the pump. The seal-less pump 1 shown in Fig. 1 has no such mechanical seals. The process fluid is deliberately allowed to enter the drive unit 4 and is used for cooling and lubricating components of the pump 1 such as the pump bearings 53, 54 and 55.

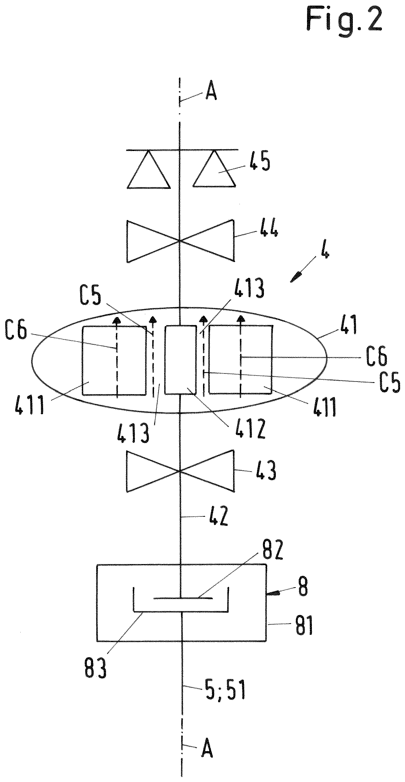

Fig. 2 shows a schematic representation of an embodiment of the drive unit 4 with drive bearings 43, 44 and 45 in more in detail. The drive unit 4 comprises an electric motor 41 and a drive shaft 42 extending in the axial direction A. For supporting the drive shaft 42 a first radial drive bearing 43, a second radial drive bearing 44 and an axial drive bearing 45 are provided, wherein the second radial drive bearing 44 and the axial drive bearing 45 are arranged above the electric motor 41 with respect to the axial direction A, and the first radial drive bearing 43 is arranged below the electric motor 41. The electric motor 41, which is arranged between the first and the second radial drive bearing 43, 44, is configured for rotating the drive shaft 42 about the axial direction A. The drive shaft 42 is connected to the drive end 51 of the pump shaft 5 by means of a hydrodynamic coupling 8 for transferring a torque to the pump shaft 5. Preferably the hydrodynamic coupling 8 is configured as a torque converter 8 for hydrodynamically coupling the drive shaft 42 to the pump shaft 5 in such a manner that the pump shaft 5 may rotate at a higher speed (rounds per minute, rpm) than the drive shaft 42.

The drive bearings 43, 44 and 45 are configured to support the drive shaft 42 both in radial direction and in the axial direction A. The first and the second radial drive bearing 43, 44 support the drive shaft 42 with respect to the radial direction, and the axial drive bearing 45 supports the drive shaft 42 with respect to the axial direction A. The second radial drive bearing 44 and the axial drive bearing 45 are arranged such that the second radial drive bearing 44 is arranged between the axial bearing 45 and the electric motor 41.

Of course, it is also possible, to exchange the position of the second radial drive bearing 44 and the axial drive bearing 45.

The second radial drive bearing 44 and the axial drive bearing 45 may be configured as separate bearings, but it is also possible that the second radial drive bearing 44 and the axial drive bearing 45 are configured as a single combined radial and axial bearing supporting the drive shaft 42 both in radial and in axial direction A.

The first radial drive bearing 43 is arranged below the electric motor 41 and supports the drive shaft 42 in radial direction. In the embodiment shown in Fig. 2, there is no axial bearing arranged below the electric motor 41. Of course, it is also possible that an axial drive bearing for the drive shaft 42 is - alternatively or additionally - arranged below the electric motor 41, i.e. between the electric motor 41 and the hydrodynamic coupling 8.

The electric motor 41 of the drive unit 4 comprises an inwardly disposed rotor 412, which is connected to the drive shaft 42 in a torque proof manner, as well as an outwardly disposed motor stator 411 surrounding the rotor 412 with an annular gap 413 between the rotor 412 and the motor stator 411. The rotor 412 may constitute a part of the drive shaft 42 or is a separate part, which is rotationally fixedly connected to the drive shaft 42, so that the rotation of the rotor 412 drivers the drive shaft 42. The electric motor 41 may be configured as a cable wound motor. In a cable wound motor the individual wires of the motor stator 411, which form the coils for generating the electromagnetic field(s), are each insulated, so that the motor stator 411 may be flooded even with an electrically conducting fluid, e.g. raw seawater. The cable wound motor does not require a dielectric fluid for cooling the motor stator 411. Alternatively, the electric motor 41 may be configured as a canned motor. When the electric drive 41 is configured as a canned motor, the annular gap 413 is radially outwardly delimited by a can (not shown) that seals the motor stator 411 hermetically with respect to the rotor 412 and the gap 413. Thus, any process fluid flowing through the gap 413 cannot enter the motor stator 411. When the electric motor 41 is designed as a canned motor a dielectric cooling fluid different from the process fluid, may be circulated through the hermetically sealed motor stator 411 for cooling the motor stator 411.

Preferably, the electric motor 41 is configured as a permanent magnet motor or as an induction motor. To supply the electric motor 41 with energy, a power penetrator (not shown) is provided at the common housing 2 for receiving a power cable (not shown) that supplies the electric motor 41 with power.

The electric motor 41 may be designed to operate with a variable frequency drive (VFD), in which the speed of the motor, i.e. the frequency of the rotation, is adjustable by varying the frequency and/or the voltage supplied to the electric motor 41. However, it is also possible that the electric motor 41 is configured differently, for example as a single speed or single frequency drive.

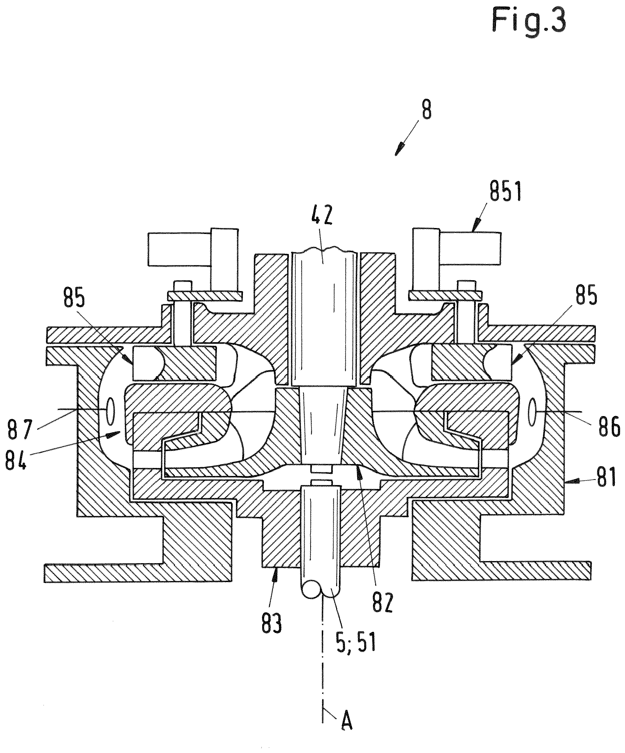

Fig. 3 shows a first embodiment of a hydrodynamic coupling 8 which is configured as a torque converter 8, for hydrodynamically coupling the drive shaft 42 to the pump shaft 5 in such a manner that the pump shaft 5 may rotate faster than the drive shaft 42, e.g. by a factor of 1.3 Thus, when the drive shaft 42 rotates for example at 6000 rpm the pump shaft 5 rotates at 7800 rpm.

The torque converter 8 comprises a casing 81 for receiving a transmission fluid, a pump wheel 82 connected in a torque proof manner to the drive shaft 42 of the drive unit 4, a turbine wheel 83 connected in a torque proof manner to the pump shaft 5 of the pump unit 3, and a stator 84 for guiding the transmission fluid from the turbine wheel 83 back to the pump wheel 82 in a manner that is as such known in the art .

The stator 84 is connected to the casing 81, which is configured as a liquid tight casing 81 in which the transmission fluid is contained. During operation the drive shaft 42 rotates the pump wheel 82 which acts on and accelerates the transmission fluid thereby transforming mechanical energy in flow energy. The transmission fluid transfers the energy to the turbine wheel 83 that transforms the flow energy back to mechanical energy and drives the pump shaft 5. The transmission fluid is then recirculated to the pump wheel 82 being guided and diverted by the stator 84.

In the embodiment shown in Fig. 3 the torque converter 8 comprises a plurality of adjustable guide vanes 85 with which the streaming of the transmission fluid can be changed. The position of the guide vanes 85 can be changed and maintained by means of an adjustment device 851. By pivoting the guide vanes 85 the incident flow of the guide vanes 85 can be changed, whereby the flow of the transmission fluid in the casing 81 is modified. Thereby the ratio of the torque transmitted to the pump shaft 5 and the torque transmitted from the drive shaft 42 is controllable.

It has to be noted that the adjustable guide vanes 85 are not necessary with respect to the invention. It is also possible that the torque convertor 8 has no adjustable guide vanes 85, but fixed guide vanes. For example, the torque convertor may be embodied with only the pump wheel 82, the turbine wheel 83 and the stator 84 having unmovable guide vanes, i.e. without any adjustable guide vanes.

Providing the torque convertor 8 for coupling the dive shaft 42 with the pump shaft 5 instead of e.g. a mechanical coupling of the drive shaft 42 and the pump shaft 5 has the important advantage that the pump shaft 5 may be rotated at a higher speed than the drive shaft. This increases the efficiency of the pump 1, because the impeller(s) 31 are rotating faster and/or because the viscous losses in the liquid filled electric motor are considerably reduced. Furthermore, by the hydrodynamic coupling the drive shaft 42 and the pump shaft 5 are torsionally decoupled, reducing e.g. impact from drive unit 4 torsional shock loads like short circuit or startup.

It is a further advantage that the torque convertor 8 may also be used for the speed control of the pump 1 or for a self-regulation of the pumping process. This is in particular applicable when the torque convertor 8 is designed with adjustable guide vanes 85, but also applicable when the torque convertor 8 has only fixed guiding elements for the transmission fluid and no adjustable guide vanes. Using the torque converter 8 for the speed control of the pump shaft 5 renders possible to operate the pump 1 without a variable frequency drive (VFD) but with a less complex and less expensive electric motor 41. Alternatively, it is possible to use a VFD with a considerably narrower range for the variation of the frequency. Both measures, configuring the pump 1 without a VFD or configuring the pump with a VFD having a narrower frequency range, reduce the costs and the complexity of the pump 1.

According to the invention the hydrodynamic coupling 8 is configured to receive the process fluid as the transmission fluid. Thus, the process fluid, e.g. water or seawater, is not only used for cooling and lubricating the bearings 43, 44, 45, 53, 54, 55 and the electric motor 41 but also as the transmission fluid for the hydrodynamic coupling 8.

The casing 81 of the torque converter 8 comprises an intake 86 for supplying the process fluid to the casing 81 of the torque convertor 8 and a discharge 87 for the drain of the process fluid. As an alternative or as a supplement the torque converter 8 may be configured such that the process fluid may enter and leave the casing 81, for example as a leakage flow, along the pump shaft 5 and/or the drive shaft 42. During operation of the pump 1 the entire common housing 2 of the pump 1 is flooded with the process fluid, so that the process fluid may enter and leave the casing 81 of the torque converter 8 through the intake 86 and the discharge 87 and/or as a leakage along the pump shaft 5 and the drive shaft 42.

In other embodiments the casing 81 has no intake 86 and no discharge 87, so that the process fluid may enter and leave the casing 81 only as a leakage along the pump shaft 5 and/or the drive shaft 42.

Depending on the pressure in the common housing 2 to which the exterior of the casing 81 of the torque converter 8 is exposed, the torque convertor 8 may generate an additional driving force for recirculating the process fluid from the high pressure side to the low pressure side of the pump 1 through the balance line 9.

During operation, the pump 1 is cooled and lubricated by means of the process fluid, e.g. seawater. In the first embodiment, shown in Fig. 1, an external cooling loop 10 is provided to enhance the cooling of the pump 1. The external cooling loop 10 is also operated with the process fluid, e.g. seawater, as heat carrier. According to this embodiment, the external cooling loop 10 comprises at least one circulation impeller 11 for circulating the process fluid through the external cooling loop 10. The circulation impeller 11 is a different feature than the impellers 31 of the pump unit 3.

Since the process fluid constitutes the heat carrier, the external cooling loop 10 may be designed as an open circuit, which receives process fluid from the pump unit 3, and which delivers the process fluid to different locations of the pump 1. The circulation impeller 11 is driven by the electric motor 41 and preferably by the drive shaft 42. As shown in Fig. 1 the circulation impeller 11 may be arranged for example on top the electric motor 41, but other location are also possible. For example, the circulation impeller(s) 11 may also be arranged at one or at more of the following locations: the non-drive end of the drive shaft 42, the drive end of the drive shaft 42, the drive end 51 of the pump shaft 5, above the balance drum 7, above the first port 91 to the balance line 9, at the non-drive end 52 of the pump shaft 5, below the second radial pump bearing 54.

The external cooling loop 10 further comprises a heat exchanger 12 for cooling the process fluid in the external cooling loop 10. The heat exchanger 12 is located outside the common casing 2. Preferably, the heat exchanger 12 is designed as a coil or a spiral that surrounds the common casing 2. In a subsea application, the seawater around the pump 1 extracts heat from the coil-shaped heat exchanger 12 at the outside of the common housing 2 and therewith cools the process liquid in the external cooling loop 10. The flow of the process fluid in the external cooling loop 10 is indicated in Fig. 1 with the dashed arrows. The heat exchanger 12 is in fluid communication with an exit 13 for receiving process fluid from the drive unit 4 as indicated by arrow C1. More precisely the exit 13 is provided at the common housing 2 at a location above the drive unit 4 and above the axial drive bearing 45, so that the heat exchanger 12 receives process fluid that has passed through the drive unit 4 and the drive bearings 43, 44, 45 and therewith cooled the drive unit 4 and the drive bearings 43, 44, 45. In the heat exchanger 12 the environment extracts heat from the process fluid and cools the process fluid. After having passed through the heat exchanger 12 the cooled process fluid is provided to several location of the pump for cooling and lubricating the components. For each location a respective entrance 14, 15, 16 for the process fluid is provided at the common housing 2. Downstream of the heat exchanger 12 a first part of the cooled process fluid, as indicated by arrow C2, is introduced through entrance 14 directly into the drive unit 4 for cooling and lubricating the drive bearings 43, 44, 45 as well as for cooling the electric motor 41. A second part of the cooled process fluid, as indicated by arrow C3, is introduced through entrance 15 directly into the axial pump bearing unit 55 for cooling and lubricating the axial pump bearing 55 and the first radial pump bearing 53 and optionally for passing through the torque converter 8. A third part of the cooled process fluid, as indicated by arrow C4, is introduced through entrance 16 directly into the second radial pump bearing 54 for cooling and lubricating the second radial pump bearing 54. The process fluid that passes through the electric motor 41 for cooling the electric motor is directed through the annular gap 413 as indicated by the dashed arrows C5 in Fig. 2. In case the motor stator 411 shall be flooded with the process fluid for cooling, e.g. when the electric motor 41 is configured as a cable wound motor the process fluid is also directed through the motor stator 411 as indicated by the dashed arrows C6 in Fig. 2.

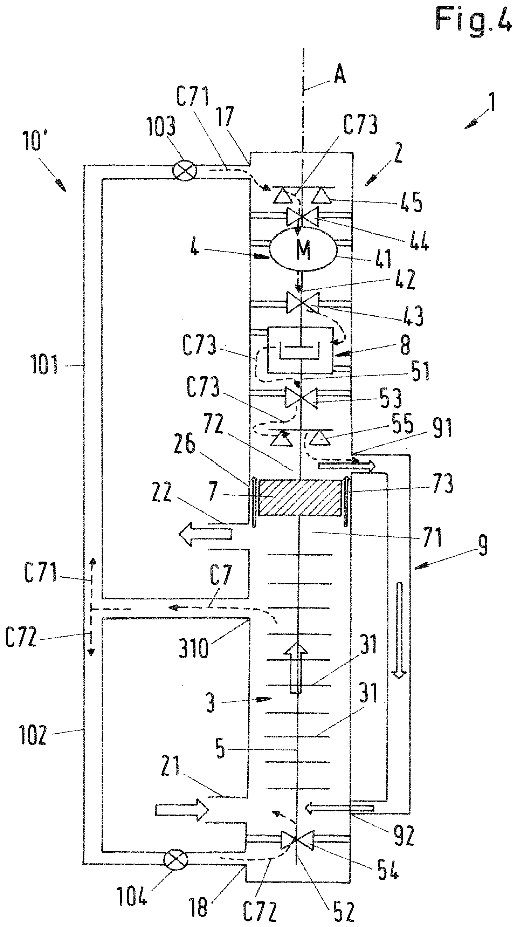

Fig. 4 shows a different design for a cooling loop 10' in a cross-sectional view similar to Fig. 1. This design does not require the circulation impeller 11 but may also comprise a circulation impeller. In the configuration shown in Fig. 4 no circulation impeller is provided for. According to this design of the cooling loop 10', the pump unit 3 comprises an intermediate take-off 310 connected to the cooling loop 10' for supplying the process fluid to the cooling loop 10' as indicated by the dashed arrow C7 in Fig. 4. The intermediate take-off 310 is configured to supply the process fluid to the cooling loop 10' at a pressure which is larger than the low pressure at the low pressure inlet 21.

The cooling loop 10' comprises a first branch 101 providing a fluid communication between the intermediate take-off 310 and an entrance 17, through which the process fluid can enter the axial drive bearing 45 for cooling and lubricating as indicated by the dashed arrows C71 in Fig. 4. The process fluid that has passed through the axial drive bearing 45 is guided through the second radial drive bearing 44, the drive unit 4, the first radial drive bearing 43, the torque converter 8 the first radial pump bearing 53, and the axial pump bearing 55 for cooling and lubricating these components as indicated by the dashed arrows C73 in Fig. 4. The process fluid that passed through the axial pump bearing 55 merges with the process fluid that passed along the balance drum 7 and enters the balance line 9.

Optionally the first branch 101 of the cooling loop 10' may comprise a first flow restrictor 103, e.g. a throttle or an orifice, provided in the first branch 101 to regulate the flow of process fluid that flows through the entrance 17.

The cooling loop 10' further comprises a second branch 102 providing a fluid communication between the intermediate take-off 310 and an entrance 18, through which the process fluid can enter the second radial pump bearing 54 for cooling and lubricating the second radial pump bearing 54 as indicated by the dashed arrows C72 in Fig. 4. When the process fluid has passed through the second radial pump bearing 54 it merges with the process fluid at the low pressure side at the pump inlet 21.

Optionally the second branch 102 may comprise a second flow restrictor 104, e.g. a throttle or an orifice, provided in the second branch 102 to regulate the flow of process fluid that it passing through the second radial pump bearing 54.

The intermediate take-off 310 may be arranged to receive the process fluid from one of the impellers 31. Thus, according to the design shown in Fig. 4 the driving force for circulating the process fluid through the cooling loop 10' is generated by one or more of the impellers 31 of the pump unit 3. Preferably, the intermediate take-off 310 is configured such, that the pressure of the process fluid in the first and the second branch 101 and 102 is at least as large as the pressure of the process fluid in the balance line 9. Even more preferred, the pressure of the process fluid in the first and the second branch 101 and 102 of the cooling loop 10' is at least a few bar higher, for example 10-30 bar higher than the pressure in the balance line 9.

The first and the second branch 101 and 102 of the cooling loop may be designed as internal lines completely extending within the common casing 2. It is also possible - as shown in Fig. 4 - that the first and the second branch 101 und 102 are configured as external lines arranged outside the common housing 2. It has to be noted that the cooling loop 10' may also comprise a heat exchanger in an analogous manner as explained for the heat exchanger 12 shown in Fig. 1.

The operation of the first embodiment of the pump 1 according to the invention will now be described referring to Fig. 1 to Fig. 3. The process fluid entering the pump 1 through the pump inlet 21 with the low pressure is pressurized by the action of the rotating impellers 31, and leaves the pump 1 through the pump outlet 22 with the high pressure as indicated in Fig. 1 and Fig. 4 by the large solid line arrows without reference numeral. The front side 71 below the balance drum 7 is in fluid communication with the pump outlet 22. Therefore, a part of the pressurized process fluid passes through the relief passage 73 to the back side 72 as indicated by arrows B1 in Fig. 1. At the back side 72 the intermediate pressure prevails which is smaller than the high pressure due to the pressure drop over the balance drum 7. Thus, a force is generated acting upon the pump shaft 5. The force is directed upwardly in axial direction A and therewith partially balancing the axial thrust that is generated by the impellers 31 and that is directed downwardly in axial direction A. At the back side 72 a part of the process fluid enters the balance line 9 through the first port 91, and another part enters the pump axial bearing 55 and merges with the process fluid of the external cooling loop 10, which enters the common housing 2 through the entrance 15.

The process fluid flowing through the balance line 9 is recirculated to the low pressure side of the pump 1 and merges with the process fluid that has been introduced from the external cooling loop 10 through entrance 16 into the second radial pump bearing 54.

The balance line 9 causes a small pressure drop so that the intermediate pressure at the back side 72 is somewhat larger than the low pressure at the pump inlet 21.

The balance drum 7 at least partially compensates the axial thrust on the pump shaft 5 that is generated by the rotating impellers 31. Even if the balance drum 7 does not completely balance said axial thrust, the load that has to be carried by the axial pump bearing 55, is considerably reduced.

In other embodiments a further balance drum is provided at the non-drive end 52 of the pump shaft 5. This might additionally increases the stability of the entire rotor device comprising the pump shaft 5, the impellers 31 and the two balance drums. By means of the two balance drums a rotordynamic vibrations of the lower part of the pump shaft 5, i.e. the part of the pump shaft 5 adjacent to the non-drive end 52 is even more reliably prevented or at least additionally reduced.

Only by way of example and for the better understanding the following different pressures may prevail at and in the pump 1: When, as an example, the pump 1 is deployed at the sea ground in a depth of 250 m below the water surface, the low pressure prevailing at the pump inlet 21 is e.g. 25 bar. The pump 1 may be configured to increase the pressure by 175 bar. Thus, the high pressure at the high pressure outlet 22 is 200 bar. When neglecting other minor pressure losses such as the pressure losses in the balance line 9, the pressure drop over the balance drum 7 is roughly 175 bar. Accordingly, the intermediated pressure prevailing at the back side 72 is approximately the low pressure, i.e. 25 bar.

The cooling and the lubricating of the pump 1 by the process fluid is achieved both by the flow through the balance line 9, which is driven by the action of the impellers 31 and indicated by the arrows in solid lines in Fig. 1, and by the flow through the external cooling loop 10 indicated by the arrows in dashed lines. Both said flows contribute to cool and lubricate the pump bearings 53, 54 and 55, the drive bearings 43, 44 and 45 as well as the electric motor 41 with the process fluid.

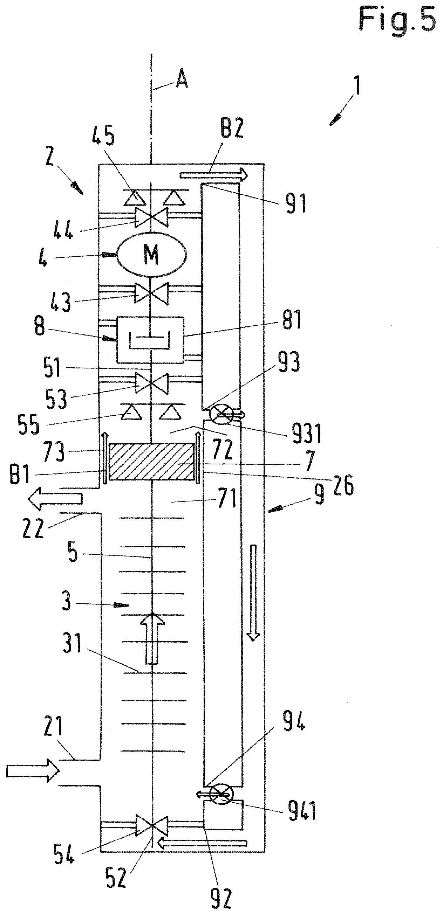

Fig. 5 shows a schematic cross-sectional view of a second embodiment of a process fluid lubricated pump 1 according to the invention.

In the following description of the second embodiment of the process fluid lubricated pump 1 only the differences to the first embodiment are explained in more detail. The explanations with respect to the first embodiment are also valid in the same way or in analogously the same way for the second embodiment. Same reference numerals designate the same features that have been explained with reference to the first embodiment or functionally equivalent features. In particular, the drive unit explained with reference to Fig. 2 as well as the torque converter explained with reference to Fig. 3 may also be used for the second embodiment.

Compared to the first embodiment, it is the main difference, that the second embodiment of the pump 1 does not comprise an external cooling loop 10. The pump bearings 53, 54, 55 as well as the drive unit 4 comprising the electric motor 41 as well as the drive bearings 43, 44, 45 as well as the torque converter 8 are only cooled and lubricated by the flow of process fluid, which is driven by the action of the impellers 31 of the pump unit 3. However, as already said, depending on the respective local pressure in the common housing 2, the torque converter 8 may generate an additional driving force for recirculating the process fluid from the high pressure side to the low pressure side of the pump 1 through the balance line 9.

The first port 91, to which the balance line 9 is connected for receiving the process fluid, is arranged above the axial drive bearing 45. The process fluid passing along the balance drum 7 through the relief passage 73 flows through the axial pump bearing 55, through the first radial pump bearing 53, through the torque converter 8, through the first radial drive bearing 43, through the drive unit 4, through the second radial drive bearing 44, and through the axial drive bearing 45. Above the axial drive bearing 45 the first port 91 is located forming the entrance to the balance line 9 as indicated by the arrow B2 in Fig. 5. Thus, the balance line 9 receives the process fluid that is discharged from the drive unit 4 and has passed through the second radial drive bearing 44 and the axial drive bearing 45. Channeling the process fluid through the bearings 55, 53, 43, 44, 45, the torque converter 8 and the drive unit 4 results in a pressure drop between the back side 72 and the port 91. The pressure drop may be a few bar, e.g. about 10 bar. Thus, at the first port 91 prevails a pressure, which is somewhat smaller than the intermediate pressure prevailing at the backside 72 between the balance drum 7 and the first radial pump bearing 53.

The second port 92, to which the balance line 9 is connected, is arranged below the second radial pump bearing 54 at the non-drive end 52 of the pump shaft 5. Thus, the process fluid exiting the balance line 9 and passing through the second port 92 is guided to pass through the second radial pump bearing 54 before the recirculated process fluid reaches the low pressure side adjacent to the pump inlet 21 Since the process fluid is directed from the second port 92 through the second radial pump bearing 54, the pressure prevailing at the second port 92 is somewhat larger than the low pressure, because there is an additional pressure drop over the second radial pump bearing 54 for example a pressure drop of approximately four bar. Neglecting the pressure drop over the balance line 9 the pressure at the second port 92 is the same as the pressure at the first port 91.

Optionally, there may be provided one or more bypass lines configured to limit the flow of process fluid through the different bearings 53, 54, 55, 43, 44, 45. In Fig. 5 a first bypass line 93 is shown, which is configured to bypass the axial pump bearing 55, the first radial pump bearing 53, the torque converter 8, the first radial drive bearing 43, the drive unit 4, the second radial drive bearing 44 and the axial drive bearing 45. A first throttle 931 is provided in the first bypass line 93 to regulate the flow of process fluid that it passing through all the components that are arranged above the balance drum 7. The first throttle 931 may be configured e.g. as an orifice. Thus, a first part of the process fluid exiting the relief passage 73 flows through all the components 55, 53, 8, 43, 4, 44, 45 arranged above the balance drum 7, and then via the first port 91 into the balance line 9, and a second part of the process fluid exiting the first relief passage 73 bypasses said components 55, 53, 8, 43, 4, 44, 45 and directly enters the balance line 9. In Fig. 5, the first bypass line 93 is shown as an external line. The entrance to the first bypass line 93 is located at the common housing 2 at a location between the first balance drum 7 and the axial pump bearing 55 (regarding the axial direction A). From said entrance the first bypass line 93 extends towards the balance line 9 and opens out into the balance line 9. However, it is also possible and for many applications even preferred, that the first bypass line 93 is configured as an internal line, which is completely located inside the common housing 2. For this purpose, the first bypass line 93 may be configured to constitute a direct flow communication between the back side 72 and the first port 91, or the volume above the axial drive bearing 45, respectively. Configuring the first bypass line 93 as an internal line has the advantage that the number of openings required at the common housing 2 may be reduced.

Optionally, a second bypass line 94 may be provided, which is configured to bypass the second radial pump bearing 54 at the non-drive end 52 of the pump shaft 5. A second throttle 941 is provided in the second bypass line 94 to regulate the flow of process fluid that it passing through the second radial pump bearing 54. The second throttle 941 may be configured e.g. as an orifice. Thus, a first part of the process fluid flowing through the balance line 9 flows through the second radial pump bearing 54 to the low pressure side, and a second part of the process fluid flowing through the balance line 9 bypasses the second radial pump bearing 54 and directly enters the low pressure side. In Fig. 5, the second bypass line 94 is shown as an external line connecting the balance line 9 with the low pressure side adjacent to the pump inlet 21. The entrance to the second bypass line 94 is located at the balance line 9. From there the second bypass line 94 extends towards the common housing 2 and is connected to an opening at the common housing, which opening is arranged at a location, where essentially the low pressure prevails. However, it is also possible and for many applications even preferred, that the second bypass line 94 is configured as an internal line, which is completely located inside the common housing 2. For this purpose, the second bypass line 94 may be configured to constitute a direct flow communication between the second port 92 or the volume below the second radial pump bearing 54, respectively, and the low pressure side or the pump inlet 21, wherein said flow communication bypasses the second radial pump bearing 54. Configuring the second bypass line 94 as an internal line has the advantage that the number of openings required at the common housing 2 may be reduced.

Reverting to the numerical example that has been given with reference to the first embodiment of the pump, the following different pressures may prevail at and in the second embodiment of the pump 1: When, as an example, the pump 1 is deployed at the sea ground in a depth of 250 m below the water surface, the low pressure prevailing at the pump inlet 21 is e.g. 25 bar. The pump 1 may be configured to increase the pressure by 175 bar. Thus, the high pressure at the high pressure outlet 22 is 200 bar. Taking into consideration that there is also a pressure drop between the back side 72 and the first port 91 as well as over the second radial pump bearing 54, the pressure drop over the balance drum 7 is less than the pressure increase generated by the pump 1, i.e. the difference between the high pressure and the low pressure. For example, the pressure drop over the balance drum 7 may be 160 bar, the pressure drop over the bearings 55, 53, 43, 44, 45, the torque converter 8 and the drive unit 4 may be 10 bar and the pressure drop over the second radial pump bearing 54 may be 5 bar. Accordingly, the intermediated pressure prevailing at the back side 72 is about 40 bar. The pressure at the first port 91, the second port 92 and within the balance line 9, is approximately 30 bar (neglecting the pressure drop over the balance line 9).

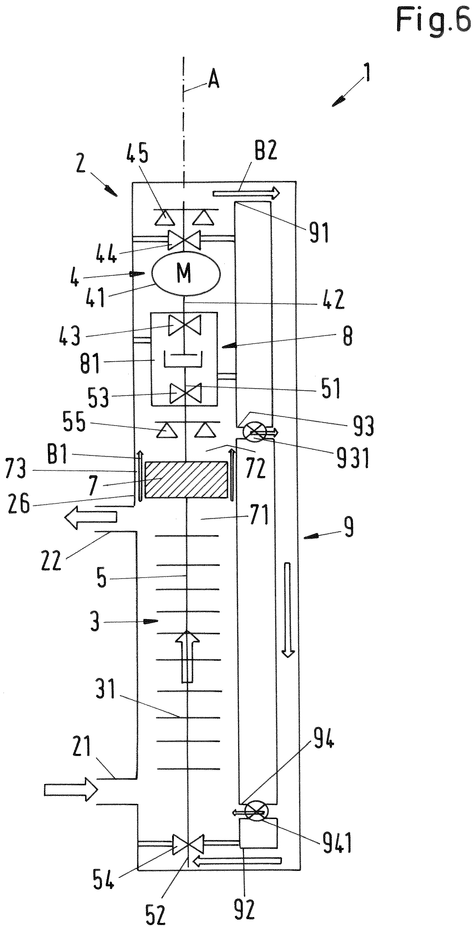

Fig. 6 shows a schematic cross-sectional view of a third embodiment of a process fluid lubricated pump 1 according to the invention.

In the following description of the third embodiment of the process fluid lubricated pump 1 only the differences to the first and the second embodiment are explained in more detail. The explanations with respect to the first embodiment and with respect to the second embodiment are also valid in the same way or in analogously the same way for the third embodiment. Same reference numerals designate the same features that have been explained with reference to the first and the second embodiment or functionally equivalent features. In particular, the drive unit explained with reference to Fig. 2 may also be used for the third embodiment, and the external cooling loop 10 (Fig. 1) as well as the cooling loop 10' (Fig. 4) may also be used for the third embodiment.

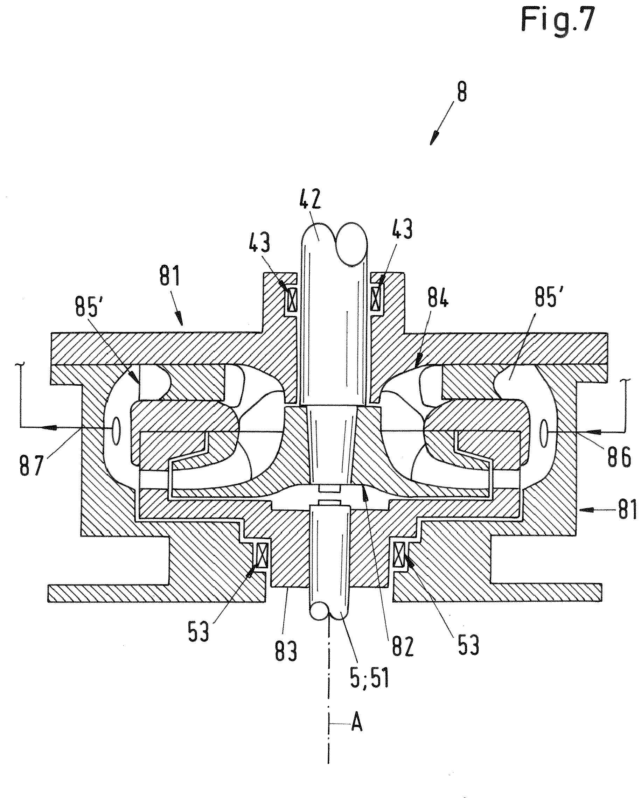

The third embodiment is similar to the second embodiment (Fig. 5). Compared to the second embodiment, it is the main difference, that the third embodiment of the pump 1 comprises a configuration of the hydrodynamic coupling 8 having at least one of the plurality of bearings 53, 54, 55, 43, 44, 45 integrated in the hydrodynamic coupling 8, in particular into the casing 81 of the hydrodynamic coupling 8. Fig. 7 shows a cross-sectional view of a second embodiment of the hydrodynamic coupling 8 with integrated bearings 43 and 53.

Also the second embodiment of the hydrodynamic coupling 8 is configured as a torque converter 8 for hydrodynamically coupling the drive shaft 42 to the pump shaft 5 in such a manner that the pump shaft 5 may rotate faster than the drive shaft 42.

The torque converter 8 comprises the casing 81 for receiving the process fluid as the transmission fluid, the pump wheel 82 connected in a torque proof manner to the drive shaft 42 of the drive unit 4, the turbine wheel 83 connected in a torque proof manner to the pump shaft 5 of the pump unit 3, and the stator 84 for guiding the process fluid from the turbine wheel 83 back to the pump wheel 82.

The stator 84 is connected to the casing 81, which is configured as a liquid tight casing 81 in which the process fluid is circulated. In the second embodiment shown in Fig. 7 the torque converter 8 comprises a plurality of fixed guide vanes 85', i.e. the position of the guide vanes 85' cannot be changed, but the guide vanes 85' are fixed with respect to the casing 81 and cannot be moved relative to the casing 81.

Of course, it is also possible to configure the second embodiment of the torque converter with guide vanes 85, which are movable with respect to casing 81.

In the embodiment shown in Fig. 6 and Fig. 7 the first radial pump bearing 43 and the first radial drive bearing 53 are both arranged in the casing 81 of the torque converter 8, Thus, the first radial pump bearing 53 and the first radial drive bearing 43 are integrated in the torque converter 8, more precisely in the casing 81, which prevents the transmission fluid, i.e. the process fluid from escaping.

Configuring the torque converter 81 with the integrated first radial pump bearing 53 and with the integrated first radial drive bearing 43 has the advantage that the overhang of both the pump shaft 5 and the drive shaft 42 is considerably reduced, because the first radial pump bearing 53 is located closer to the drive end 51 of the pump shaft 5 and the first radial drive bearing 43 is located closer to the drive end of the drive shaft 42.

As can be best seen in Fig. 7 the first radial pump bearing 53 is arranged in the casing 81 and between the casing 81 and the turbine wheel 83, so that the first radial pump bearing 53 surrounds the turbine wheel 83. Of course, in another configuration the first radial pump bearing 53 may also be arranged in the casing 81 such that the bearing 53 surrounds the pump shaft 5. The first radial drive bearing 43 is arranged in the casing 81 and between the casing 81 and the drive shaft 42, so that the first radial drive bearing 43 surrounds the drive shaft 42. Of course, in another configuration the first radial drive bearing 43 may also be arranged in the casing 81 such that the bearing 43 surrounds the pump wheel 82.

During operation the torque converter 8 is immersed in the process fluid which entirely fills the common housing 2 of the pump 1. The process fluid may leak between the first radial pump bearing 53 and the turbine wheel 83 or the pump shaft 5, respectively, into and out of the torque converter 8. Furthermore, the process fluid may leak between the first radial drive bearing 43 and the drive shaft 42 or the pump wheel 82, respectively, into and out of the torque converter 8.

The second embodiment of the torque converter 8 may be configured with the intake 86 or without the intake 86.

The second embodiment of the torque converter 8 may be configured with the discharge 87 or without the discharge 87.

Although it is preferred that both the first radial pump bearing 53 and the first radial drive bearing 43 are arranged in the casing 81, in other embodiments only the first radial drive bearing 43 or only the first radial pump bearing 53 is arranged in the casing 81, so that only one bearing 43 or 53 is integrated in the torque converter 8.

In still other embodiments it is also possible that at least one of the axial pump bearing 55 and the axial drive bearing 45 is arranged in the casing 81 of the torque converter 8. Exemplary, a few configurations are listed here:
only the axial drive bearing 45 is arranged in the casing 81 of the torque converter 8;
only the axial drive bearing 45 and the first radial drive bearing 43 are arranged in the casing 81 of the torque converter 8;
only the axial pump bearing 55 is arranged in the casing 81 of the torque converter 8;
only the axial pump bearing 55 and the first radial pump bearing 53 are arranged in the casing 81 of the torque converter 8;
only the axial pump bearing 55, the first radial pump bearing 53 and the first radial drive bearing 43 are arranged in the casing 81 of the torque converter 8;
the axial pump bearing 55, the axial drive bearing 45 the first radial pump bearing 53 and the first radial drive bearing 43 are arranged in the casing 81 of the torque converter 8.

It goes without saying that also the first embodiment of the process fluid lubricated pump 1 (Fig. 1 and Fig. 4) may be provided with the second embodiment of the hydrodynamic coupling 8, i.e. with a torque converter having at least one of the bearings 43, 45, 53, 55 arranged within the casing 81 of the torque converter. Preferably, the first radial pump bearing 53 and the first radial drive bearing 43 are arranged in the casing 81 of the torque converter 8.

In other configurations the pump unit 3 may comprise a first pump section having a first set of impellers 31 and a second pump section having a second set of impellers 31.

The first pump section comprising the first set of impellers 31 and the second pump section comprising the second set of impellers 31 may be arranged in an inline arrangement or in a back-to-back arrangement.

In an inline arrangement the first set of impellers 31 and the second set of impellers 31 are configured such that the axial thrust generated by the action of the rotating first set of impellers 31 is directed in the same direction as the axial thrust generated by the action of the rotating second set of impellers 31. Thus, the flow of process fluid, which is generated by the second set of impellers 31, is directed in the same direction as the flow of process fluid, which is generated by the first set of impellers 31. In such an arrangement the common housing 2 may be provided with an additional inlet and with an additional outlet, such that the first pump section and the second pump section may be used as two pumps.

In a back-to-back arrangement the first set of impellers 31 and the second set of impellers 31 are configured such that the axial thrust generated by the action of the rotating first set of impellers 31 is directed in the opposite direction as the axial thrust generated by the action of the rotating second set of impellers 31. Thus, the flow of process fluid, which is generated by the second set of impellers 31, is directed in the opposite direction as the flow of process fluid, which is generated by the first set of impellers 31.

For many applications the back-to-back arrangement is preferred because the axial thrust acting on the pump shaft 5, which is generated by the first set of impellers 31 counteracts the axial thrust, which is generated by the second set of impellers 31. Thus, said two axial thrusts compensate each other at least partially.

## Claims

1. A process fluid lubricated pump for conveying a process fluid, having a common housing (2), a pump unit (3) arranged in the common housing, and a drive unit (4) arranged in the common housing (2),
wherein the common housing (2) comprises a pump inlet (21) and a pump outlet (22) for the process fluid,
wherein the pump unit (3) comprises at least one impeller (31) for conveying the process fluid from the pump inlet (21) to the pump outlet (22), and a pump shaft (5), on which each impeller (31) is mounted,
wherein the drive unit (4) comprises a drive shaft (42) for driving the pump shaft (5), and an electric motor (41) for rotating the drive shaft (42) about an axial direction (A), and wherein a hydrodynamic coupling (8) is provided for hydrodynamically coupling the drive shaft (42) to the pump shaft (5) by means of a transmission fluid, **characterized in that** the hydrodynamic coupling (8) is configured to receive the process fluid as the transmission fluid.

2. A pump in accordance with claim 1, wherein the hydrodynamic coupling (8) comprises a casing (81) for receiving the process fluid as the transmission fluid, a pump wheel (82) connected to the drive shaft (42), a turbine wheel (83) connected to the pump shaft (5), and a stator (84) arranged between the pump wheel (82) and the turbine wheel (83) for guiding the process fluid.

3. A pump in accordance with anyone of the preceding claims, comprising a plurality of bearings (43, 44, 45, 53, 54, 55) for supporting the pump shaft (5) and the drive shaft (42), wherein the bearings (43, 44, 45, 53, 54, 55) are configured to receive the process fluid as lubricant and coolant.

4. A pump in accordance with anyone of the preceding claims, designed as a seal-less pump (1) without a mechanical seal.

5. A pump in accordance with anyone of the preceding claims comprising a balance line (9) configured for the recirculation of process fluid from a high pressure side to a low pressure side of the pump (1).

6. A pump in accordance with anyone of the preceding claims, wherein the electric motor (41) is configured to be passed through and cooled by the process fluid.

7. A pump in accordance with claim 5, wherein the balance line (9) is arranged and configured to receive process fluid discharged from the drive unit (4).

8. A pump in accordance with anyone of claims 3-7, having an external cooling loop (10) for cooling and lubricating the drive unit (4) and the plurality of bearings (43, 44, 45, 53, 54, 55), the external cooling loop (10) comprising a heat exchanger (12) for cooling the process fluid, wherein the heat exchanger (12) is arranged outside the common housing (2) and configured to receive process fluid from the common housing (2) and to recirculate the process fluid to the common housing (2).

9. A pump in accordance with anyone of claims 3-8, wherein the pump unit (3) comprises an intermediate take-off (310) connected to a cooling loop (10'), wherein the intermediate take-off (310) is configured to supply the process fluid to the cooling loop (10') with a pressure that is larger than the pressure of the process fluid at the pump inlet (21), and wherein the cooling loop (10') is configured to supply process fluid to at least one bearing of the plurality of bearings (43, 44, 45, 53, 54, 55) and/or to the drive unit (4).

10. A pump in accordance with anyone of the preceding claims, comprising at least one balance drum or center bush or throttle bush (7) fixedly connected to the pump shaft (5) and defining a front side (71) facing the pump unit (3) and a back side (72), and further comprising a relief passage (73), which is provided between said balance drum (7) and a stationary part (26) configured to be stationary with respect to the common housing (2), wherein the relief passage (73) is extending in axial direction (A) along the balance drum (7) from the front side (71) to the back side (72).

11. A pump in accordance with anyone of claims 3-10, wherein at least one of the plurality of bearings (43, 44, 45, 53, 54, 55) is arranged in the casing (81) of the hydrodynamic coupling (8).

12. A pump in accordance with anyone of claims 3-11, wherein the plurality of bearings comprises a first radial pump bearing (53) for supporting the pump shaft (5), wherein the first radial pump bearing (53) is arranged between the pump unit (3) and a drive end (51) of the pump shaft (5), and wherein the first radial pump bearing (53) is arranged in the casing (81) of the hydrodynamic coupling (8).

13. A pump in accordance with anyone of claims 3-12, wherein the plurality of bearings comprises a first radial drive bearing (43) for supporting the drive shaft (42), wherein the first radial drive bearing (43) is arranged between the pump unit (3) and the electric motor (41), and wherein the first radial drive bearing (43) is arranged in the casing (81) of the hydrodynamic coupling (8).

14. A pump in accordance with anyone of the preceding claims, configured as a vertical pump with the pump shaft (5) extending in the direction of gravity, and wherein the drive unit (4) is arranged on top of the pump unit (3).

15. A pump in accordance with anyone of the preceding claims configured for installation on a sea ground and preferably configured as a water injection pump for injecting seawater into a subterranean region.
